# EUROPEAN PATENT APPLICATION

(11) **EP 1 832 211 A1**
(43) Date of publication of application: **12.09.2007**
(21) Application number: 07004564.6
(22) Date of filing: 06.03.2007
(51) Int. Cl.: A47J 37/10

(54) **Pan with a liquid collecting tray**

(30) Priority: 08.03.2006 IT MI20060081
(71) Applicant: BALLARINI PAOLO & FIGLI S.p.A., 46017 Rivarolo Mantovano (MN) (IT)
(72) Inventor: Dall'Asta, Massimo, 26041 Casalmaggiore (IT)
(74) Representative: Mayer, Hans Benno

(57) **Abstract**

A pan (1) with a liquid collecting tray (6) comprises a pan bottom (F) having a plurality of shallow channels (2,3,4,5,11,12,13), leading to a collecting cavity (6) formed in the bottom (F), the channel extending toward the collecting cavity (6), which is advantageously formed near the pan handle (8,9).

## Description

### BACKGROUND OF THE INVENTION

The invention relates to a pan having a liquid collecting tray.

The prior art already disclosed to provide pans, used, for example, for cooking meat, with parallel ribs designed to form on the meat being cooked parallel strips, like those which would be formed on the meat if the latter would be cooked on a grill.

However, the above pan bottoms have the drawback that the food is subjected to different temperatures varying from the rib ridges to the rib depressions.

Moreover, the above mentioned prior pan bottoms have the further drawback that, since the bottom ribs are arranged in a single common plane, the cooking liquids, such as the meat juice and fat, remain trapped between the bottom ribs and, accordingly, said liquids may be overheated and/or burnt.

A further drawback of prior pans, in particular those pans used for cooking meat, is that it is not possible to collect the cooking liquids to allow the latter to be taken and spayed again on the meat being cooked.

Yet another drawback of prior parallel rib pans, is that said pans cannot be used for other cooking operations, such as for frying eggs, cutlets covered with breadcrumbs or the like.

### SUMMARY OF THE INVENTION

Accordingly, the aim of the present invention is to overcome the above prior drawbacks and provide a pan having a flat cooking bottom without projecting bottom ribs, while allowing the cooking liquid to be gradually accumulated and conveyed to a preset bottom region, to be accurately herein collected.

According to the invention, the above aim is achieved owing to the fact that the pan bottom comprises a plurality of shallow channels leading to a collecting cavity formed in the bottom and that said channels descend toward the collecting cavity.

In a particularly advantageous manner, the collecting cavity is formed near the pan handle.

### BRIEF DESCRIPTION OF THE DRAWINGS

Further advantages of the invention will become more apparent hereinafter from the following disclosure, the accompanying figures and claims.

The subject matter of the invention will be disclosed in a more detailed manner hereinafter with reference to some embodiments thereof and to the accompanying drawings, where:
Figure 1 is a top plan view of a pan according to the present invention;
Figure 2 shows a cross-sectional detail of the pan, taken along the line II-II of figure 1;
Figure 3 shows the bottom of a pan partially covered by a food body to be cooked; and
Figures 4 to 6 show further embodiments of the pan bottom.

### DESCRIPTION OF THE PREFERRED EMBODIMENTS

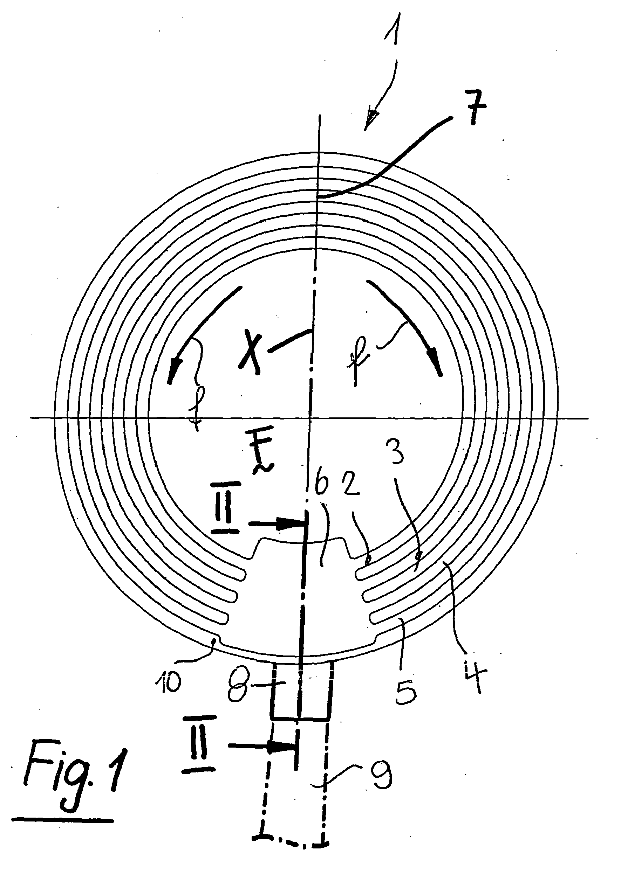

As shown in figure 1, the subject pan, which has been generally indicated by 1, comprises a pan bottom F including a plurality of channels 2, 3, 4 and 5 which, as shown in figure 1, are arranged with a concentric arrangement.

All said channels 2, 3, 4 and 5 have end portions leading to a collecting cavity 6.

In a particularly advantageous manner, the channels 2, 3, 4 and 5, starting from a region 7 defined, for example, by the middle line X, have a descending pattern, i.e. each said channels 2, 3, 4 and 5 has, from the region (X, 7) an increasing depth. In other words, said channels 2, 3, 4 and 5, starting from the middle line X of the region 7 gradually descends toward the collecting cavity 6.

Practical tests have shown that the slope of the channels 2, 3, 4 and 5, having a comparatively large width, may be selected very small, that is with a tilting which, from the region (X, 7) to the collecting cavity 6 has a value from about 0.2 to 0.5 mm.

Thus, by the above approach, it is possible to provide the pan with a multiple use functionality, while allowing said pan to be also used for cooking other food products, different from meat. Since the channels 2, 3, 4, 5 have a very small depth, it is moreover obtained that the overall surface of the pan 1 will intervene in an even manner in the cooking operation.

Owing to the above disclosed tilting, the cooking juices or dissolved fat material may move in the direction shown by the arrows (f) in figure 1, to arrive, during the cooking operation, at the collecting cavity 6.

In a particularly advantageous manner, the collecting cavity 6 is formed near the fitting arrangement 8 receiving, in a conventional manner, the pan handle 9, which is conventionally arranged to be easily accessible by the user during the cooking operation.

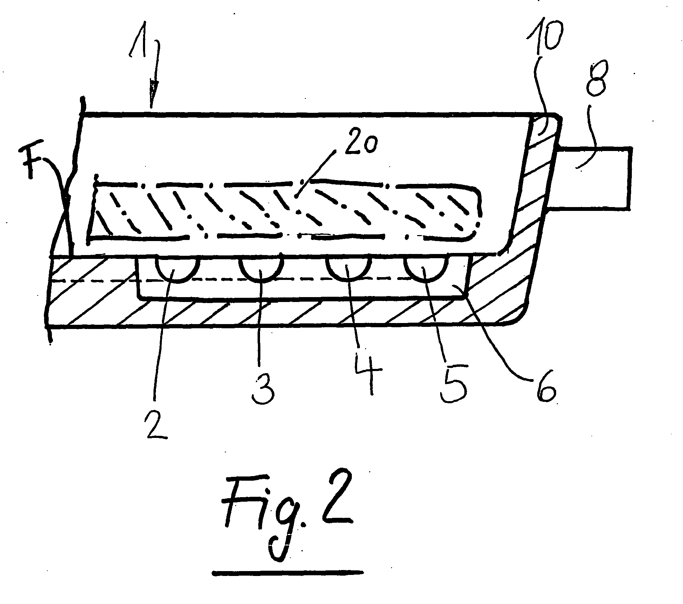

Figure 2 shows a detail of the pan 1 having a perimetrical rim 10 therewith is conventionally rigid the handle support 8.

The cross-sectional view of figure 2 schematically shows the channels 2, 3, 4 and 5 which, in this embodiment, are mutually concentrically arranged, and also shows that said channels 2, 3, 4 and 5 lead to a collecting cavity 6 for accumulating therein the cooking liquid coming from said channels 2, 3, 4, 5.

In figure 2, for clearness reasons, said channels 2, 3, 4, 5 and collecting cavity 6 have been shown with an enlarged depth, but, actually, said channels 2, 3, 4, 5 have a depth corresponding to few tenths mm, while the collecting cavity 6 is characterized by a depth which is slightly larger than that of the channels.

Figure 2 also shows a food body 20, for example a meat piece to be cooked.

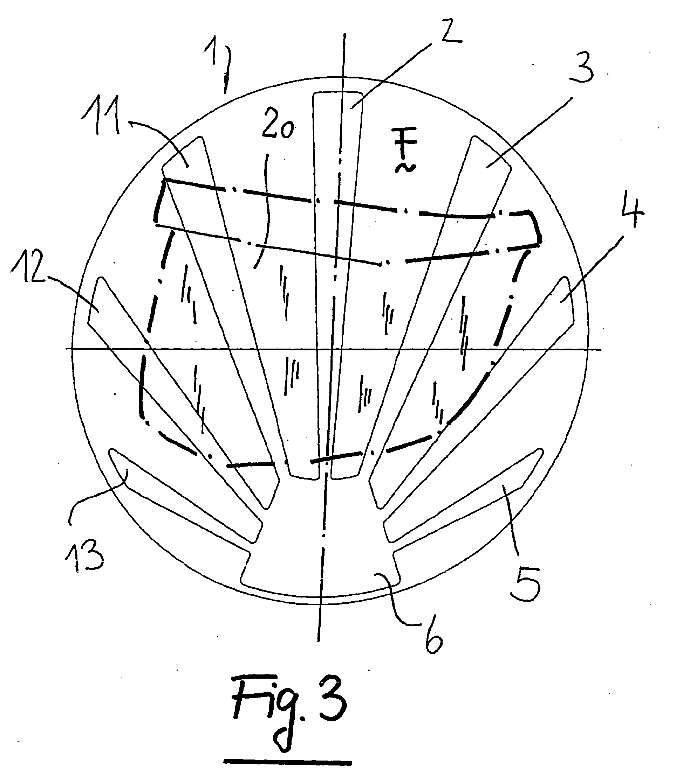

Figure 3 shows a pan having a plurality of channels 2, 3, 4, 5, 11, 12 and 13 converging to a collecting cavity 6, formed near the rim of the pan 1.

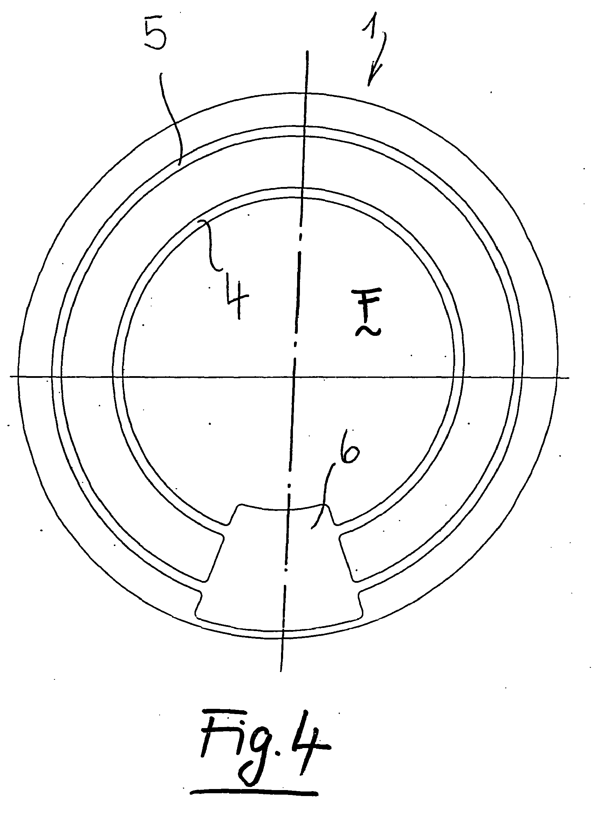

Figure 4 shows a further pan 1 including only two concentric channels 4, 5 sloping toward the collecting cavity 6, thereby conveying the cooking liquid to said collecting cavity 6.

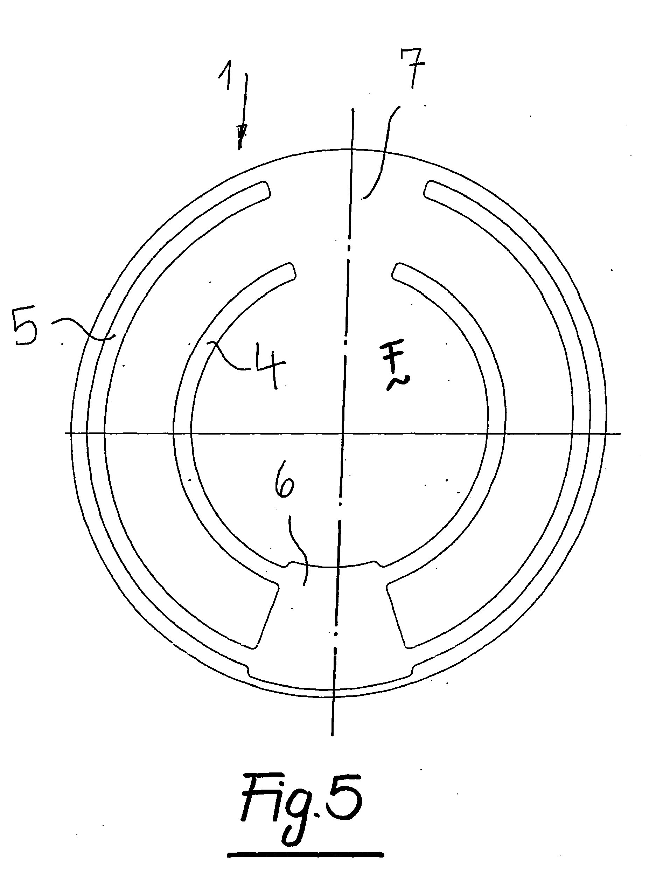

Figure 5 shows a further pan 1 including two channels 4 and 5 which are broken near the bottom region 7 and leading, with a set sloping, to the collecting cavity 6.

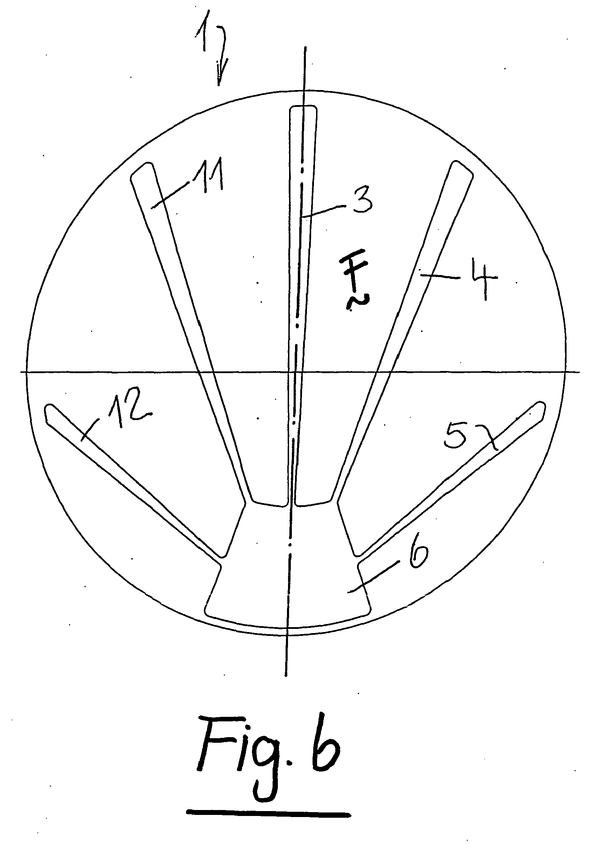

Finally, figure 6 shows a further pan 1 having a plurality of channels 3, 4, 5 and 11 and 12 which are arranged with the converging arrangement and extend, with a set sloping, from the outer circumference of the pan 1 toward the collecting cavity 6.

In this connection it should be apparent that the configuration of the channels may be selected at will, provided that all the cooking liquid collecting channels are tilted toward the collecting cavity 6, to which said channel lead.

## Claims

1. A pan with a liquid collecting tray, **characterized in that** said pan comprises a pan (1) bottom (F) including a plurality of shallow channels (2, 3, 4, 5; 11, 12, 13) leading to a collecting cavity (6) formed in said bottom (F) and that said channels (2, 3, 4, 5; 11, 12, 13) are descending toward said collecting cavity (6).

2. A pan, according to claim 1, **characterized in that** said collecting cavity (6) is arranged near a handle (8, 9) of said pan (1).

3. A pan, according to claim 1, **characterized in that** each said channel (2, 3, 4, 5; 11, 12, 13) descends toward said collecting cavity (6) starting from a region (X, 7) of said pan bottom (F).

4. A pan, according to claim 3, **characterized in that** said channels (2, 3, 4, 5; 11, 12, 13) are tilted toward said collecting cavity (6) with a sloping value from about 0.2 to 0.5 mm.

5. A pan, according to claim 1, **characterized in that** said collecting cavity (6) has a collecting cavity depth which is slightly larger than the depth of said channels (2, 3, 4, 5; 11, 12, 13).
